# EUROPEAN PATENT SPECIFICATION

(11) **EP 1 807 731 B1**
(45) Date of publication and mention of the grant of the patent: **25.04.2012**
(21) Application number: 05796910.7
(22) Date of filing: 27.10.2005
(51) Int. Cl.: G02F 1/1335, G06K 19/07, G02F 1/167

(54) **SMART CARD WITH A DISPLAY INCORPORATED THEREIN**
CHIPKARTE MIT EINER DARIN INTEGRIERTEN ANZEIGE
CARTE INTELLIGENTE À AFFICHEUR INTÉGRÉ

(30) Priority: 29.10.2004 EP 04105403
(43) Date of publication of application: 18.07.2007
(73) Proprietor: Koninklijke Philips Electronics N.V., 5621 BA Eindhoven (NL)
(72) Inventor: JAGT, Hendrik, A-1101 Vienna (AT); SLIKKERVEER, Peter, A-1101 Vienna (AT)
(74) Representative: Schouten, Marcus Maria
(86) International application number: PCT/IB2005/053516
(87) International publication number: WO 2006/046214

(56) References cited:
- EP-A- 0 600 349
- EP-A- 1 081 533
- US-A1- 2002 027 620
- US-B1- 6 323 989

## Description

### FIELD OF THE INVENTION

The present invention relates to a smart card having a front surface and a display, which has an activated state and an inactivated state and which is incorporated in the device and has a display surface.

### BACKGROUND OF THE INVENTION

In the ongoing development of information technologies displays of different kinds are becoming incorporated in more and more types of devices that, in the past, were not provided with displays. Examples of such devices include smart cards, household appliances, garments, dash-boards of cars etc. The display could, as example, be a LCD display or another type of display. It is often desired that the display is visible when activated but more or less invisible when not activated, or, as alternative, that the display has a decorative appearance when not activated. Since the device, on which the display is located, often is provided with a limited power capacity it is preferable that the display has a low energy consumption in both the inactivated and in the activated state.

US 6,583,369 B2 describes a device in the form of a scale having a display. The display might be a LCD display provided with back lighting or a LED display. The scale has a cover, the upper surface of which is made of a darkly tinted translucent plastic. The display is provided under the upper surface and is hidden by the darkly tinted translucent plastic when inactivated. When activated, lit, the display can be observed through the darkly tinted translucent plastic.

The scale of US 6,583,369 B2 has the disadvantage that the energy consumption of the display is fairly high since a substantial amount of light is required to visualize the display through the darkly tinted translucent plastic. Further the option of making a bright cover is difficult since such a bright cover could hardly hide the display in its inactivated state without also substantially hiding it also in its activated state.

US 2002/0027620 discloses a display assembly including an electro-optical display and a photovoltaic cell behind the display, the display having a reflective part for hiding the photovoltaic cell and providing an aesthetic background color to the display.

### OBJECT AND SUMMARY OF THE INVENTION

An object of the present invention is to provide a device having a display incorporated therein, the display providing the desired appearance in the inactivated state without requiring a high energy consumption in the activated state.

This object is achieved by a smart card device as defined in claim 1 having a front surface and a display, which has an activated state and an inactivated state and which is incorporated in the device and has a display surface, which is at least partially surrounded by said front surface, the display having a light reflecting part which, in the inactivated state of the display, reflects incoming light to provide the display surface with substantially the same visual appearance as the visual appearance of the front surface at least partially surrounding the display surface.

An advantage of this device is that most of the light reaches the display. This makes it possible to operate a reflective display which does not have the need for any back lighting or other light source. In many applications, such as smart cards, this is a great advantage since the power and space available is very limited. Another advantage is that the light reflected from a light reflecting part of the display makes it comparably simple to match a display surface to a bright coloured, such as yellow or orange coloured, front surface. The display can thus be made an integrated part of the decoration of the device. The display is thus adapted to provide not only a good brightness and contrast but to provide, by the matching of the display surface with the front surface of the device, a desired design of the entire device.

Some embodiments of the invention provide the advantage that the display is almost invisible in its inactivated state. This provides for a pleasing design having information available and displayed when it is needed but in other occasions the display is not visible since it mimics the surrounding surface and does not disturb the visual appearance of the device. A further advantage is that, if the back ground colour of the display in its activated state is chosen such that it has the same visual appearance as that of the display surface in its inactivated state, dark or bright signs displayed on the display in its activated state would pleasingly look like they were shown directly on the front surface and not on a display.

Some embodiments of the invention provide the advantage that it enables a good matching between the front surface and the display surface using display parts that are available in the display anyway and just need to be tuned in colour with the front surface. Thus no additional parts are required.

Some embodiments of the invention provide an advantageous way of providing for good matching between the display surface and the front surface without adding extra thickness to the display.

Some embodiments of the invention provide the advantage that an even better matching between the visual appearance of the front surface to that of the display surface is possible due to the fact that minor differences in the wave length and intensity of light reflected from the light reflecting part compared to the light reflected from the front surface can be levelled out by means of the tinted cover.

Some embodiments of the invention provide the advantage that it is possible to obtain a coloured appearance of the display surface also in cases where the light reflecting part is of a kind that reflects all wave lengths, such as in an electrophoretic display in bright mode.

Some embodiments of the invention provide the advantage that slight differences between the visual appearance of the front surface and of the display surface are smoothly levelled out by the fuzzy transition area in such a way that the differences are hardly observed.

Some embodiments of the invention provide the advantage that displays being at least partly reflective have a low energy consumption and, additionally, reflect light such that the desired visual appearance can be obtained.

Some embodiments of the invention provide the advantage that electrophoretic displays are reflective displays with low energy consumption, bistability, "paper like" performance, e.g. in viewing angle, and the possibility to use a wide variety of different colours to match with the visual appearance of the front surface.

Some embodiments of the invention provide the advantage that cholesteric LCD displays are available in a wide variety of colours to match with the visual appearance of the front surface and the colour shift as function of viewing angle provides a high tech look.

Some embodiments of the invention provide the advantage that LCD displays are comparably cheap to manufacture and work well in conditions with no internal light source.

Some embodiments of the invention provide the advantage that a very pleasing grainy, metallic visual appearance of the display surface can be obtained, which appearance matches in an attractive way with grainy metallic lacquers used on many exclusive devices, such as smart cards from exclusive companies.

Some embodiments of the invention provide the advantage that the display surface could be even better hidden in the front surface. Displaying parts of patterns, logos etc on the display in its inactivated state reduces the area required in the front surface to bear such information and thereby advantageously increases that part of the surface of a device which can be occupied by the display.

These and other aspects of the invention will be apparent from and elucidated with reference to the embodiments described hereinafter.

### BRIEF DESCRIPTION OF THE DRAWINGS

The invention will now be described in more detail with reference to the appended drawings in which:
Fig. 1 is a top view and provides a schematic representation of a smart card according to the invention in a first operational mode.
Fig. 2 is a top view and provides a schematic representation of the smart card of Fig. 1 in a second operational mode.
Fig. 3. a three-dimensional view of a card body for the smart card of Fig. 1.
Fig. 4 is a top view of the wiring of the smart card of Fig. 1.
Fig. 5 is a cross section of the smart card of Fig. 2, in the second operational mode, taken along line V-V.
Fig. 6 is an enlarged cross section and shows the area VI shown in Fig. 5.
Fig. 7 is an enlarged cross section of a part of a smart card according to a second embodiment of the invention.
Fig. 8 is an enlarged cross section of a part of a smart card according to a third embodiment of the invention.
Fig. 9 is an enlarged cross section of a part of a smart card according to a fourth embodiment of the invention.
Fig. 10 is an enlarged cross section of a part of a smart card according to a fifth embodiment of the invention.
Fig. 11 is a top view and provides a schematic representation of a smart card according to a sixth embodiment of the invention in a first operational mode.
a top view and provides a schematic representation of the smart card of Fig. 11 in a second operational mode.

### DESCRIPTION OF EMBODIMENTS

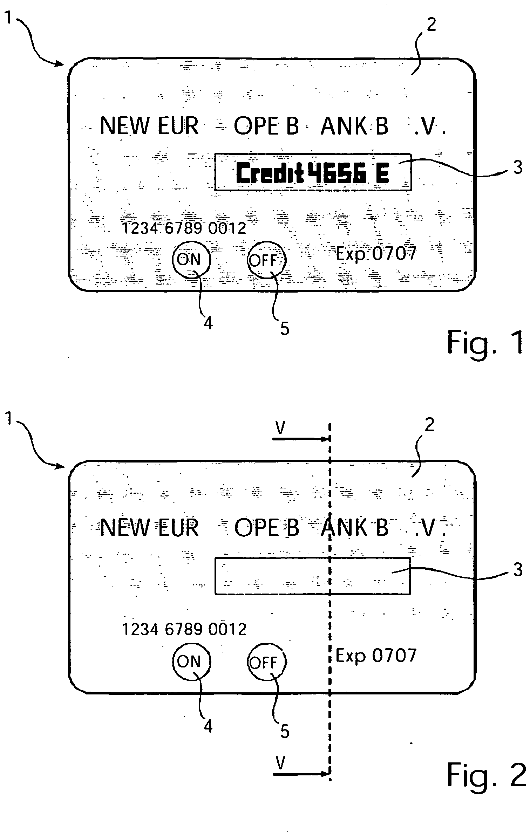

Fig. 1 shows schematically a device according to the invention in the form of a smart card 1. The smart card I has a front surface 2 indicating information about the smart card, such as the issuer, the expiry date etc. The front surface 2 surrounds a display surface 3. In the occasion shown in Fig. 1 the display surface 3 is in an activated state and indicates the credit available on the account which is connected to the smart card 1. The smart card 1 is provided with an on-button 4 and an off-button 5 to enable a user to decide when the credit amount is to be displayed on the display surface 3.

Fig. 2 shows the smart card 1 after the display surface has been inactivated. As is clear from Fig. 2 the front surface 2 and the display surface 3 merges into one another so that it is more or less impossible to see where the front surface 2 ends and where the display surface 3 starts. This provides one desired visual appearance where credit information can be displayed on demand on the display surface 3 whereas the display surface 3 cannot be distinguished from the surrounding front surface 2 when being inactivated.

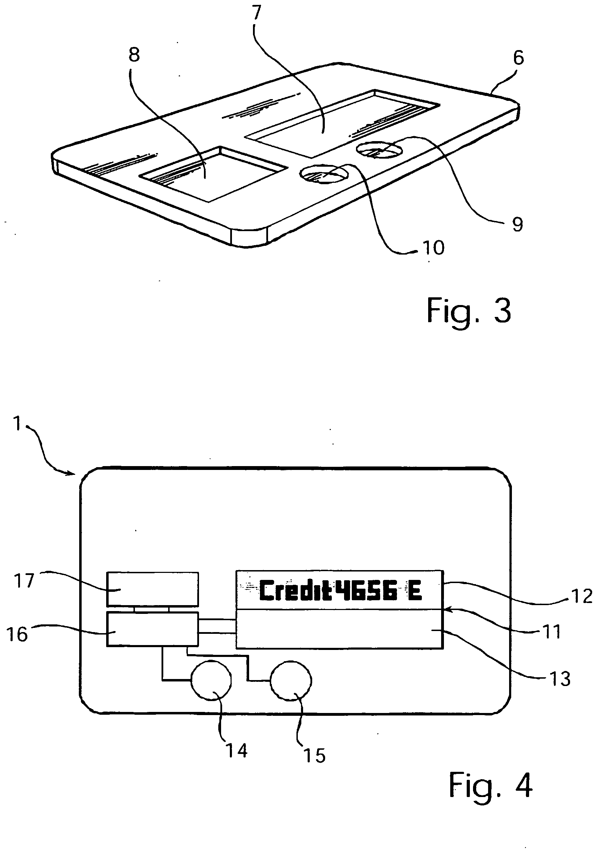

Fig. 3 is a three-dimensional view of a card body 6 of the smart card 1. The card body 6 is a plastic sheet which is provided with a display cavity 7, a processor and battery cavity 8 and button cavities 9, 10.

Fig. 4 is a schematic wiring diagram of the smart card 1. The smart card 1 is provided with a display 11 having an actual display area 12 and a display electronics area 13 containing the necessary connections for controlling the display 11. The display 11, an on-button sensor 14 and an off-button sensor 15 communicate with a processor 16. Depending on the status of the buttons 4, 5 and the information stored in the memory of the processor 16 the processor 16 controls the display 11 to present the desired information, if any. A battery 17 supplies the display 11 and the processor 16 with power.

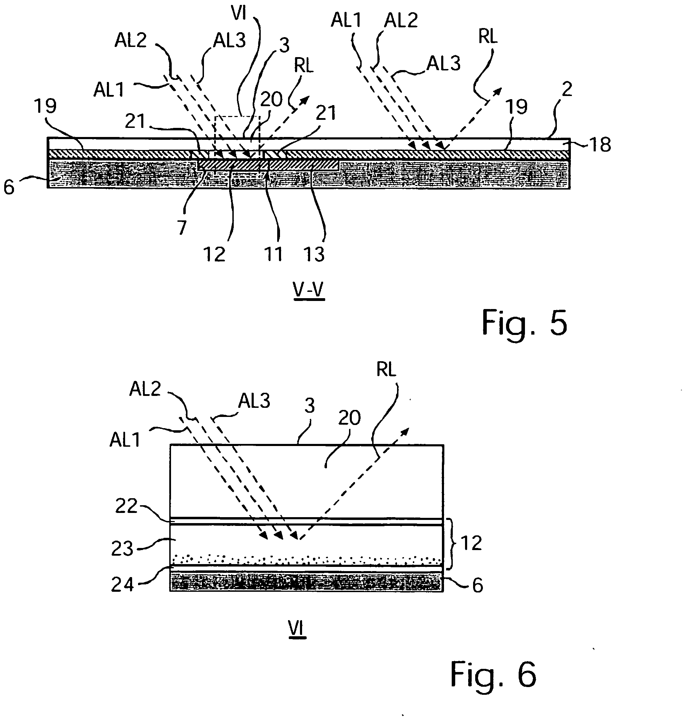

Fig. 5 is a cross section of the smart card 1 along the line V-V of fig. 2. As is shown in Fig. 5 the display 11 is positioned in the display cavity 7. A transparent cover 18 is placed on the card body 6. At the face of the transparent cover 18 facing the card body 6 and in those parts corresponding to the front surface 2 a non-transparent print 19 has been applied to the cover 18. The non-transparent print 19 includes the background colour, logos and text information that is to be presented on the front surface 2 of the card 1 as is shown in Fig. 2. The non-transparent print 19 thus cover the card body 6, the display electronics area 13, the button sensors, the battery and the processor so that they cannot be observed at the front surface 2. That part of the transparent cover 18 that is to form the display surface 3 is however not provided with any print and forms a transparent cover window 20 through which the display area 12 could be observed. A transition area 21 is formed between the front surface 2 and the display surface 3. The transition area 21 is made fuzzy, which means that the non-transparent print 19 in this transition area 21 gradually fades away to end up being transparent close to the cover window 20. The transition area 21 thereby provides a visually soft transition from the front surface 2 to the display surface 3. Incoming ambient light of three different wave lengths is represented by three arrows AL1, AL2 and AL3. As is indicated to the right in Fig. 5 incoming ambient light that coincides with the non-transparent print 19 result in the absorption of the wave lengths AL1 and AL2 whereas light of the third wave length AL3 is reflected as a reflected light RL. Incoming ambient light that coincides with the display surface 3 will be transmitted through the cover window 20 and coincide with the display area 12. The display area 12 has a light reflecting part, which will be described further below, which absorbs light of the wave lengths AL1 and AL2 and reflects incoming ambient light of the third wave length AL3 providing a reflected light RL which has substantially the same wave length, and thus colour, as the light reflected from the non-transparent print 19. Since the light RL reflected from the non-transparent print 19 and from the display area 12 has the same wave length, and thus colour, the display surface 3 will be very difficult to distinguish from the surrounding front surface 2 when the display 11 is in its inactivated state.

The display area 12 is very thin, typically less than 0.6 mm thick. One reason for a thin display area 12 is that a low thickness is necessary to make the display area 12 fit into the card body 6 of the smart card 1. A further reason is that the level, at which light RL is reflected from the display area 12, is preferably located less than about 0.5 mm below the level at which light RL is reflected from the print 19. This low difference between the levels is preferable since a high difference in levels would make it observable that the light RL reflected from the display area 12 is reflected from a much lower level than the light RL reflected from the print 19.

Fig. 6 is an enlargement of the area VI of Fig. 5. The display area 12 of this embodiment is a coloured electrophoretic display. The electrophoretic display, which is per se known and is described in documents like WO99/53373 and WO2004/001497 and is developed by SiPix Technologies Inc. CA, USA among others, is based on charged particles, usually white particles, such as titanium dioxide particles, that are made to move in a coloured fluid under the influence of an electrical field, which is controlled individually for each picture element of the display. In the present invention the display area 12 has a first transparent electrode 22, such as an Indium Tin Oxide (ITO) electrode, an optical, switchable layer in the form of an electrophoretic medium 23 containing a coloured fluid and particles, and a grid 24 of second electrodes that are individual for each picture element. Further the display area 12 is provided with other components, including carrier substrates, as is per se known, but which is not shown in Fig. 6 (and neither in the following embodiments). In the embodiment of Fig. 6 the display area 12 has, in its inactivated state, been controlled by the processor 16 to have the particles located at the grid 24 of second electrodes. The incoming ambient light will pass through the cover window 20 and the transparent electrode 22 and reach the electrophoretic medium 23. In the medium 23 the ambient light of the wave lengths AL1 and AL2 will be absorbed by the coloured fluid while ambient light of the wave length AL3 will be reflected through the electrode 22 and the window 20 as a reflected light RL. If for instance the coloured fluid is green it will only reflect green light and thus the visual appearance of the display surface 3 will be green. In designing the smart card I the colour of the non-transparent print 19 and the colour of the coloured fluid of the electrophoretic medium 23 is matched so that the light RL observed at the display surface 3 has substantially the same colour as the light RL observed at the front surface 2 surrounding the display surface 3. In this matching it is also to be accounted for electrodes etc. Thus, for example, the colour of the print 19 should be tuned not to exactly the same colour as the colour of the coloured fluid but to provide the front surface 2 with the same visual appearance as that visual appearance which the display surface 3 is given by the reflection of the coloured fluid.

It will be appreciated that, as alternative to the electrophoretic display shown in Fig. 6, a cholesteric LCD which is coloured in its inactivated state or a bistable cholesteric LCD set to its coloured state could also be used. In such a case the incident ambient light of a certain wave length would be reflected by the cholesteric liquid crystal layer of the cholesteric LCD while the other wave lengths would be absorbed. Cholesteric LCD displays are per se known, for instance from US 4,447,132, and comprises CTLC-molecules that form either ordered helical structures that act as Bragg reflectors for light or a non ordered phase which is basically transparent (slightly scattering). The colours that are not reflected on the CTLC-molecules are instead absorbed by a dark absorber, e.g. a black or blue absorber placed below the CTLC-molecule layer.

Still another alternative to the electrophoretic display shown in Fig. 6 is a tuned normally black liquid crystal display (LCD). By "normally black" is meant that the LCD display in its inactivated state is in a dark state and reflects only little light giving the display a dark appearance, i.e. most of the light is absorbed in the display. By tuning the optical components of such a normally black LCD it is possible to provide the display with some reflection, making it possible to obtain e.g. a dark green light or a dark blue light reflected from the liquid crystal layer. The modification of the normally black LCD could be made, as an example, by modifying the optical design of the display, e.g. by choosing the retardance, dispersion and type (linear or twisted) of the compensation layers, by choosing the retardance, dispersion and twist angle of the LC layer, and by modifying the relative angles between polariser, compensation layers and LC-alignment directions in the display. Also, additionally or alternatively, coloured polarisers can be used which do not have a full transmission across the entire visible wavelength range. Also the Liquid Crystal layer itself might be dyed providing a colour, such as in a type of LCD known as guest-host LCD. Yet another alternative is to do one or several of the above mentioned modifications for a "normally white" LCD display. By "normally white" is meant that the LCD in its inactivated state allows ambient light to enter the display area, be reflected on a reflector and leave the display area, giving it a bright appearance. The normally white LCD display could, with the aid of some the above mentioned modifications, be made to look brightly coloured, for instance, bright yellow or bright blue.

According to Fig. 1 the display area 12 in the activated state presents information with dark signs on a bright background. The bright back ground is the same as is displayed in the inactivated state and has the same visual appearance as the front surface 2. Thus, also in the activated state, the visual appearance of the back ground of the display surface 3 matches with the visual appearance of the front surface 2 and gives the pleasing impression that the black signs are shown directly on the front surface 2 of the smart card 1 and not on a display area incorporated therein.

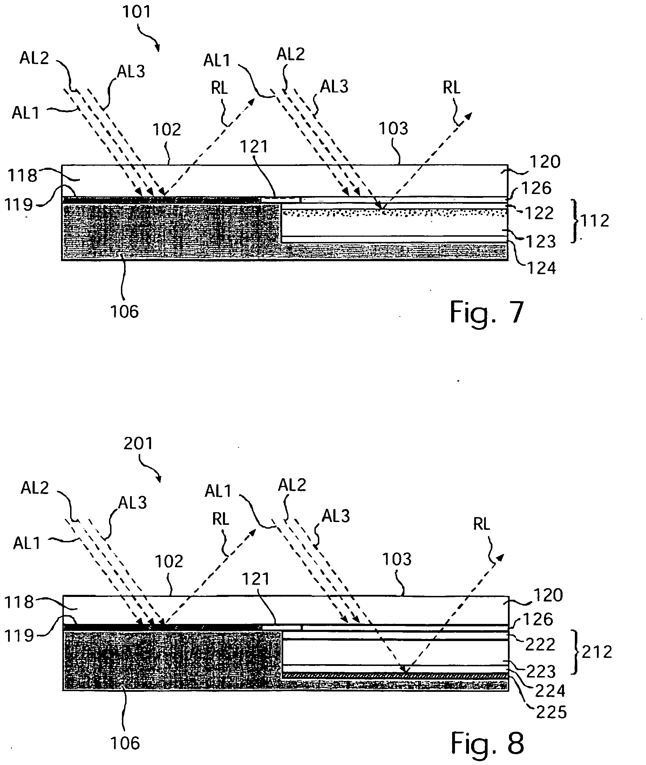

Fig. 7 is an enlarged cross section and shows a part of a second embodiment of the invention in the form of a smart card 101. In this alternative embodiment a display area 112, which is fitted to a card body 106, is an electrophoretic display as described above and thus has a transparent first electrode 122, an electrophoretic medium 123 containing a coloured fluid and white particles, and a grid 124 of second electrodes that are individual for each picture element. A cover window 120 is applied to the display area 112 at the area of a display surface 103. The cover window 120 has, adjacent to the first electrode 122 of the display area 112, a coloured semi-transparent layer 126, for instance a transparent plastic to which a small amount of a colouring agent of a certain colour has been added. Preferably the colouring agent is a non-scattering dye, which absorbs colours, since the display area 112 in itself has a scattering effect. As alternative a pigment based colouring agent could be used. A processor, not shown in Fig. 7, has controlled the white particles to move to the first electrode 122 prior to switching the display area 112 to its inactivated state, which state is what is shown in Fig. 7. Incident ambient light of the wave lengths AL1 and AL2 will be absorbed by the semi-transparent layer 126 of the cover window 120. Ambient light of the wave length AL3 will pass through the window 120 and the first electrode 122 and will then be reflected on the white particles in the electrophoretic medium 123 back through the electrode 122 and the window 120 as a reflected light RL. If for instance the layer 126 of the cover window 120 is yellow it will absorb all colours but yellow light, which will be reflected on the white particles back through the window 120 and thus the visual appearance of the display surface 103 will be yellow. In designing the smart card 101 the colour of a non-transparent print 119, applied on a transparent cover 118 provided on the card body 106, and the colour of the layer 126 of the cover window 120 applied to the display area 112 is matched so that the light RL observed at the display surface 103 has substantially the same colour as the light RL observed at a front surface 102 surrounding the display surface 103. A transition area 121 is made fuzzy to provide a smooth transition from the front surface 102 to the display surface 103.

As alternative to the above described electrophoretic display having white particles moving in a coloured liquid it is also possible to use an electrophoretic display of a type in which dark and bright particles, which may be coloured, move in a non-coloured liquid.

Fig. 8 is an enlarged cross section and shows a part of a third embodiment of the invention in the form of a smart card 201. The smart card 201 is similar to the smart card 101 except for that the display, of which only the display area 212 is shown in Fig. 8, that is incorporated in the smart card 201 is a normally white Super Twisted Nematic (STN) liquid crystal display (LCD). The other parts, such as the non-transparent print 119, the cover 118 and the coloured cover window 120 etc are similar to those parts described with reference to Fig. 7 and are therefore given the same reference numerals. The display area 212 of the display is provided with a first transparent electrode 222, an optical, switchable layer in the form of a liquid crystal layer 223, a second transparent electrode 224, and a reflector 225. Further the display area 212 is provided with carrier substrates, compensation films and polarisers, all of which are not shown in Fig. 8, as is per se known. By "normally white" is meant that the LCD in its inactivated state, i.e. when there is no voltage applied between the electrodes 222, 224, allows ambient light to enter the display area 212, be reflected on the reflector 225 and leave the display area 212. Incident ambient light of the wave lengths AL1 and AL2 will be absorbed by the semi transparent layer 126 of the cover window 120. Ambient light of the wave length AL3 will pass through the window 120, the first electrode 222, the liquid crystal layer 223, the second electrode 224 and will then be reflected on the reflector 225 back through the electrodes 222, 224, the layer 223 and the window 120 as a reflected light RL. If for instance the layer 126 of the cover window 120 is yellow it will absorb all colours but yellow light, which will be reflected on the reflector 225 back through the window 120 and thus the visual appearance of the display surface 103 will be yellow. In designing the smart card 101 the colour of a non-transparent print 119, which is applied on a transparent cover 118 provided on the card body 106, and the colour of the layer 126 of the cover window 120 applied to the display area 212 is matched in a similar way as described with reference to Fig. 7.

It will be appreciated that, as alternative to the normally white LCD shown in Fig. 8, a normally white cholesteric LCD or a bistable cholesteric LCD set to its bright state could also be used. Cholesteric LCD displays are, as mentioned above, per se known, for instance from US 4,447,132.

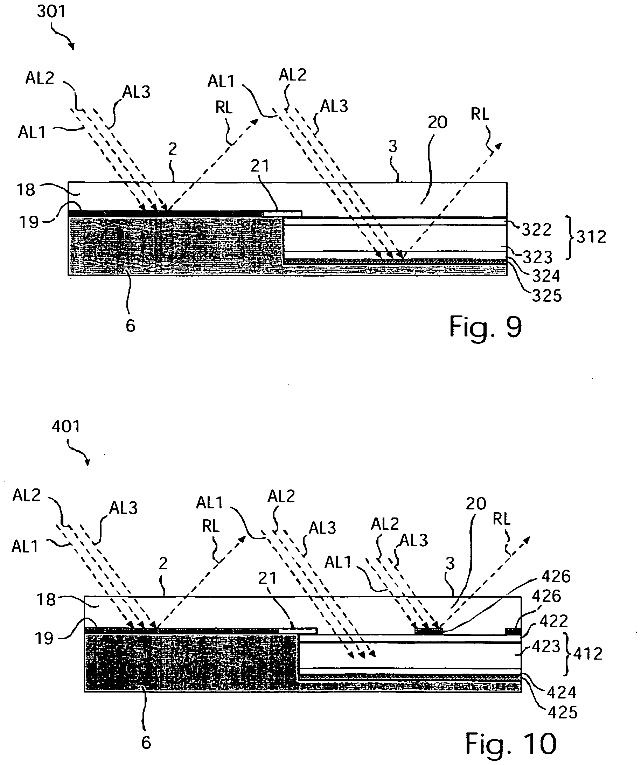

Fig. 9 is an enlarged cross section and illustrates a fourth embodiment of the invention in the form of a smart card 301. The smart card 301 is similar to the smart card 1 except for that the display, of which only the display area 312 is shown in Fig. 9, that is incorporated in the smart card 301 is a normally white STN liquid crystal display (LCD) having a coloured reflector 325. The other parts, such as the non-transparent print 19, the cover 18 and the cover window 20 etc are similar to those described with reference to Fig. 5 and 6 and are therefore given the same reference numerals. The display area 312 of the display is provided with a first transparent electrode 322, an optical, switchable layer in the form of a liquid crystal layer 323, a second transparent electrode 324 and the coloured reflector 325. Additionally the LCD comprises compensation films and polarisers etc that are not shown in Fig. 9. The reflector 325 is made from a coloured flaked lacquer. Preferably the lacquer is non-scattering since a scattering lacquer might cause an unwanted depolarisation of the light upon reflection. The coloured flaked lacquer could, for example, be formulated by mixing one or several dyes with an organic binder and thin metallic flakes. Alternatively the metallic flakes themselves could be coloured. A flaked lacquer has the advantage of being a specular mirror only on a micro scale (in the micron range) that does not depolarise the light while the effect of all differently oriented flakes appear to be diffuse and gives a grainy appearance without any unwanted macro scale mirror effects, such as the user seeing his/her own face reflected. Incident ambient light of the wave lengths AL1 and AL2 will be absorbed by the reflector 325. Ambient light of the wave length AL3 will pass through the window 20, the first electrode 322, the optical, switchable layer in the form of the liquid crystal layer 323, the second electrode 324 and will then be reflected on the reflector 325 back through the electrodes 322, 324, the layer 323 and the window 20 as a reflected light RL. If for instance the reflector 325 is made from a gold coloured flaked lacquer it will reflect light with a golden glow, which will be reflected back through the window 20 and thus the visual appearance of the display surface 3 will be golden metallic. In designing the smart card 301 the colour of a non-transparent print 19, applied on a transparent cover 18 provided on the card body 6, and the colour of the reflector 325 is matched in a similar way as described with reference to Fig. 5 and 6. A coloured reflector 325 having a golden or silver colour is particularly attractive since it matches well with a gold metallic or silver metallic print which is often used in smart cards.

As alternative to the coloured reflector described above with reference to Fig. 9 it is also possible to use a normal reflector having a transparent coloured layer provided thereon or, as yet another alternative, to use a metallic mirror made from a coloured material, such as gold. The metal surface could be slightly roughened to minimize the mirror images provided by the reflector. Alternately a diffusing layer could be provided on top of the reflector, for example by laminating a metallized foil to the rear of the display area by means of e.g. a scattering pressure sensitive adhesive.

It will be appreciated that, as alternative to the normally white LCD shown in Fig. 9, a normally white cholesteric LCD or a bistable cholesteric LCD set to its bright state could also be used. In such a case the reflector shown in Fig. 9 is replaced by a coloured layer, usually called the absorber, in the same position, that reflects only the desired wave lengths and absorbs the other wave lengths. To further improve the "invisibility" of a cholesteric LCD display the colour change as a function of the angle of light incidence caused by Bragg reflection, which is the basis of the display effect, could be reproduced by applying cholesteric or other diffractive/holographic paints in the transition area 21 and/or on parts of the whole front surface.

Fig. 10 is an enlarged cross section and illustrates a fifth embodiment of the invention in the form of a smart card 401. The smart card 401 is similar to the smart card 301 except for that the display, of which only the display area 412 is shown in Fig. 10, that is incorporated in the smart card 401 is a normally black liquid crystal display (LCD). The other parts, such as the non-transparent print 19, the cover 18 and the cover window 20 etc are similar to those described with reference to Fig. 9 and are therefore given the same reference numerals. The display area 412 of the display is provided with a first transparent electrode 422, an optical, switchable layer in the form of a liquid crystal layer 423, a second transparent electrode 424 and a reflector 425. On top of the first electrode 422 a reflective or scattering coloured pattern 426 is positioned. The coloured pattern 426 cover only about 0.1-10% of the area of the first electrode 422 and thus most incident ambient light of all wave lengths AL1, AL2 and AL3 will pass through the first electrode 422 and be absorbed in the display area 412 of the normally black LCD in its inactivated state. A minor amount of the incident ambient light will, however, coincide with the coloured pattern 426. Ambient light of the wave lengths AL1 and AL2 will be absorbed by the coloured pattern 426 while light of the wave length AL3 will be reflected on the pattern 426 through the window 20 as a reflected light RL. Due to the low coverage of the pattern 426 only a small amount of the incident ambient light will be reflected whereas most of the light will be absorbed in the display area 412. Thus the visual appearance of the display surface 3 will be a rather dark colour. If for instance the pattern 426 is made from a red lacquer it will reflect a minor amount of the red light, which will be reflected back through the window 20 and thus the visual appearance of the display surface 3 will be dark red. In designing the smart card 401 the colour of a non-transparent print 19, applied on a transparent cover 18 provided on the card body 6, and the colour and the coverage of the pattern 426 is matched in a similar way as described above with reference to Fig. 5 and 6. It will be appreciated that a low coverage of the pattern 426 is necessary since, in the activated state of the display, most of the incident ambient light must reach the liquid crystal layer 423 without being reflected or absorbed on the pattern 426 and that most of the light must also be reflected towards the display surface 3 without being reflected or absorbed on the under side of the pattern 426.

It will be appreciated that, as alternative to the normally black LCD shown in Fig. 10, a bistable cholesteric LCD set to its transparent state with a dark background could also be used. Yet another alternative is to use, as alternative to the normally black LCD of Fig. 10, an electrophoretic display which is set to its dark state.

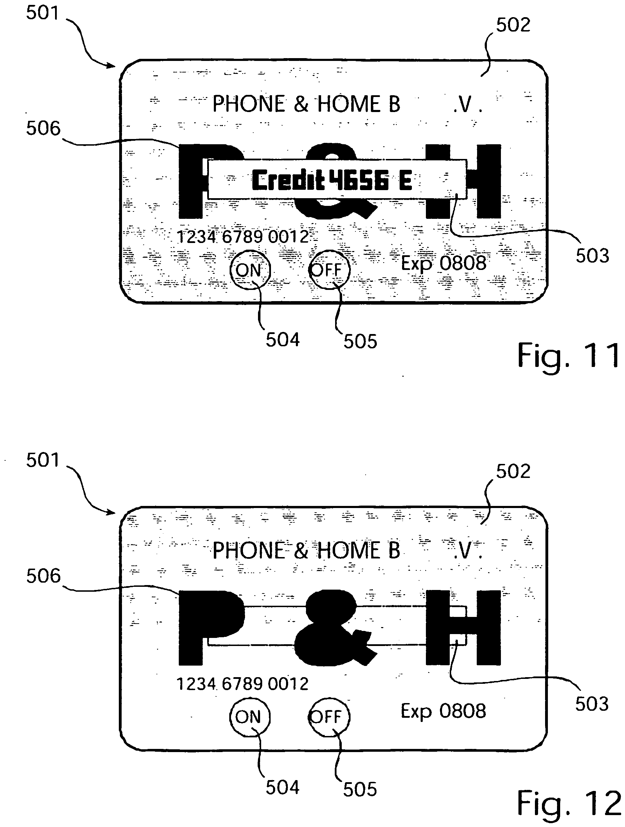

Fig. 11 shows schematically a smart card 501 according to a sixth embodiment of the invention. The smart card 501 is similar to the smart card 1 shown in Fig. 1 and thus has a front surface 502 indicating information about the smart card, such as the issuer, the expiry date etc. The front surface 502 surrounds a display surface 503. In the occasion shown in Fig. 11 the display area located under the display surface 503 is in an activated state and indicates the credit available on the smart card 501. The smart card 501 is provided with an on-button 504 and an off-button 505 that are similar to those indicated in Fig. 1. As is shown in Fig. 11 the display surface 503 is located at the centre of a graphical pattern 506 in the form of the logo "P & H" which is located on the front surface 502. In the activated state shown in Fig. 11 the credit amount is clearly indicated in dark letters against a bright back ground on the display surface 503.

Fig. 12 shows the smart card 501 after the display area has been put to an inactivated state. In the embodiment of Fig. 11-12 the display area is an electrophoretic display, such as that described above with reference to Fig. 6 and 7. An inherent characteristic of the electrophoretic display is that it is bistable, which means that it can be set to have, just before being inactivated, both bright and dark areas. These bright and dark areas then retain their respective appearance in the inactivated state of the electrophoretic display. In the embodiment of Fig 11-12 the electrophoretic display is controlled by a processor (similar to that indicated in Fig. 4), which has stored in its memory information about the graphical pattern 506, i.e. the logo, to display dark and bright areas in such a way that the design shown on the display surface 503 forms part of the logo "P & H" shown on the front surface 502. As is clear from Fig. 12 the design shown on the front surface 502 and the display surface 503 merges into one another so that a complete logo "P & H" is shown and that it is almost impossible to see where the display surface 503 is located.

It will be appreciated that, as alternative to the electrophoretic display described above with reference to Fig. 11-12, another bistable display, such as bistable LCD or bistable cholesteric LCD, could also be used.

It will further be appreciated that numerous modifications of the embodiments described above are possible within the scope of the appended claims.

Thus for example it is described above that the appearance of the display surface in the inactivated state of the display is matched with the front surface of the device in such a way that the display is more or less "invisible" when in the inactivated state. As alternative not falling within the scope of the invention it is also possible to provide the display surface, in the inactivated state of the display, with a first colour, such as gold metallic, and the front surface with another colour, such as silver metallic. In such a case the display would form an integrated design element in the decoration of the device, the display surface being in contrast with the front surface.

The LCD's described above are of the Super Twisted Nematic (STN) type. It will be appreciated that Twisted Nematic (TN) LCD's and other types of LCD's may be used as well.

Above electrophoretic displays, LCD's and cholesteric LCD's are described. It will be appreciated that also other types of displays, that comprise a light reflecting part, may be used. One example of an alternative display type is the stratified/paintable LCD type by which an LCD can be constructed from a single substrate using in-plane switching electrodes, electro-optically switching the liquid crystal material, which is trapped inside polymer capsules, from only one substrate. Other alternative LCD display types are the PDLC type (Polymer Dispersed Liquid Crystal), which scatter light in one state (reflecting) and is transparent in the other and do not need polarisers, the VAN type (Vertical Aligned Nematic), and the IPS type (In Plane Switching). Examples of further alternative display types that could be used include electrowetting displays, that are described in, among other documents, WO 03/071335 and WO 03/071347, electrochromic displays, that are described in, among other documents, WO 91/14197 and WO 97/22906, and gyricon displays, that are described in, among other documents, US 5,815,306 and EP 1 005 008.

In the embodiments described above it is described that the colour of the print is matched with the colour of the light reflected by the display area. It will be appreciated that the light reflected from e.g. the reflector of an LCD display will travel through several components, such as electrodes, liquid crystal layers, polarisers etc and become more or less dimmed at this passage. This dimming effect is preferably taken account for when choosing the colour of the print. For instance the print could be dimmed as well to give the same impression.

Above it is described that the display surface is to have a certain colour, such as green, red, yellow, or gold metallic, in the inactivated state of the display. It is however also possible to have a display surface which has no real colour but which is set to an intermediate colour between its bright and dark state. It will further be appreciated that the display surface could have a non-homogeneous colouring in the inactivated state to adapt to a general decoration of the device to which it is attached. For instance the left part of the display surface could be yellow and the right part could be orange. This could be obtained by, for example, providing on top of the display area a semi transparent layer having two different colours.

In the embodiments described above the device illustrated is a smart card. Smart cards have a very small area available for a battery and recharging is not attractive and thus reflective displays, such as described above with reference to Fig. 1-12, are preferred since they work with the ambient light and no backlighting is required. It will be appreciated that the present invention is also useful for other devices, such as household appliances, garments, dash boards of cars etc. which devices have incorporated therein a display and in which a more or less "invisible" appearance of the display in its inactivated state is desired. In such devices it could also be attractive to have a transflective display, i.e. a display having a reflective part which is also pervious to a back lighting to be used at night.

To summarize, a device, such as a smart-card 1, has a front surface 2 and a display area 12. The display area 12 has an activated state and an inactivated state and is incorporated in the device 1 and has a display surface 3, which is surrounded by said front surface 2. The display area 12 has a light reflecting part 23; 123; 225; 325; 426 which, in the inactivated state of the display area 12, reflects incoming light. The light reflected by the reflecting part provides the display surface 3 with a desired visual appearance in relation to the visual appearance of the front surface 2 surrounding the display surface 3.

## Claims

1. A smart card device (1) having a front surface (2) and a display (11), which has an activated state and an inactivated state and which is incorporated in the device (1) and has a display surface (3), which is at least partially surrounded by said front surface (2), the display (11) having a light reflecting part (23; 123; 225; 325; 426) which, in the inactivated state of the display (11), reflects incoming light,
wherein the reflecting part is adapted such that in the inactivated state, the display provides the display surface (3) with substantially the same visual appearance as the visual appearance of the front surface (2) at least partially surrounding the display surface (3), such that the display surface (3) cannot be distinguished from the surrounding front surface (2).

2. A device according to claim 1, wherein the display (11) itself is adapted for reflecting light of a certain colour in the inactivated state of the display (11).

3. A device according to claim 2, wherein the display is provided with a reflector (325) which is located behind an optical, switchable layer (323) of the display and reflects light of a certain colour in the inactivated state of the display.

4. A device according to claim 1, wherein a transparent cover (120) is applied on top of the display (11), the transparent cover (120) being provided with a tinting to provide, when combined with the light reflected from the light reflecting part (123; 225), the display surface (103) with the desired visual appearance.

5. A device according to claim 4, wherein the transparent cover (120) is provided with a colouring agent to provide the desired visual appearance, in the inactivated state of the display, when combined with light reflected from the light reflecting part (123; 225).

6. A device according to any preceing claim, wherein a transition area (21; 121) located at the transition between the front surface (2; 102) and the display surface (3 ; 103) is made fuzzy to provide a smooth visual transition between the display surface (3; 103) and the front surface (2; 102).

7. A device according to any preceding claim, wherein the display is chosen among reflective displays and displays being partially reflective and partially transmissive.

8. A device according to any preceding claim, wherein the display is an electrophoretic display (12; 112).

9. A device according to any one of claims 1 to 7, wherein the display is a cholesteric LCD display, the light reflecting part comprising the liquid crystal layer of the LCD display, the colour of which layer is adapted to provide the desired visual appearance of the display surface.

10. A device according to any one of claims 1 to 7, wherein the display is a LCD display.

11. A device according to claim 10, wherein the display is a normally white LCD display (312) having a reflector (325) being provided with a metallic lacquer and forming said light reflecting part.

12. A device according to claim 1, the display being chosen among electrophoretic displays, bistable cholesteric displays and bistable LCD displays, thus being able to present both dark and bright portions on the display surface (503) also in the inactivated state of the display, the display providing, in its inactivated state, a graphical pattern matching a graphical pattern (506) on the front surface (502) at least partially surrounding the display surface (503).

## Patentansprüche

1. Chipkarteneinrichtung (1) mit einer Vorderfläche (2) und einer Anzeigeanordnung (11), die einen aktivierten Zustand und einen inaktivierten Zustand hat und in der Einrichtung (1) integriert ist und eine Anzeigefläche (3) aufweist, die wenigstens teilweise von der genannten Vorderfläche (2) umgeben ist, wobei die Anzeigeanordnung (11) einen Licht reflektierenden Teil (23; 123; 225; 325; 426) aufweist, der in dem inaktivierten Zustand der Anzeigeanordnung (11) eintreffendes Licht reflektiert,
wobei der reflektierende Teil derart vorgesehen ist, dass in dem inaktivierten Zustand die Anzeigeanordnung die Anzeigefläche (3) mit im Wesentlichen dem gleichen optischen Aussehen wie das optische Aussehen der die Anzeigefläche (3) wenigstens teilweise umgebenden Vorderfläche (2) versieht, so dass die Anzeigefläche (3) nicht von der umgebenden Vorderfläche (2) unterschieden werden kann.

2. Einrichtung nach Anspruch 1, wobei die Anzeigeanordnung (11) selbst zum Reflektieren einer bestimmten Farbe in dem inaktivierten Zustand der Anzeigeanordnung (11) vorgesehen ist.

3. Einrichtung nach Anspruch 2, wobei die Anzeigeanordnung mit einem Reflektor (325) versehen ist, der hinter einer optischen umschaltbaren Schicht (323) der Anzeigeanordnung liegt und Licht einer bestimmten Farbe in dem inaktivierten Zustand der Anzeigeanordnung reflektiert.

4. Einrichtung nach Anspruch 1, wobei die transparente Deckschicht (120) über die Anzeigeanordnung (11) angeordnet ist, wobei die transparente Deckschicht (120) mit einer Tönung vorgesehen ist, damit, wenn mit dem von dem Licht reflektierenden Teil; (123; 225) reflektierten Licht kombiniert, die Anzeigefläche (103) mit dem gewünschten optischen Aussehen versehen wird.

5. Einrichtung nach Anspruch 4, wobei die transparente Deckschicht (120) mit einem Farbstoff versehen ist, der kombiniert mit an dem Licht reflektierenden Teil (123; 225) reflektiertem Licht in dem inaktivierten Zustand der Anzeigeanordnung das gewünschte Aussehen schafft.

6. Einrichtung nach einem der vorstehenden Ansprüche, wobei ein transparentes Gebiet (21; 121) am Übergang zwischen der Vorderfläche (2; 102) und der Anzeigefläche (3; 103) zum Schaffen eines geschmeidigen Übergangs zwischen der Anzeigefläche (3; 103) und der Vorderfläche (2; 102) verschwommen gemacht ist.

7. Einrichtung nach einem der vorstehenden Ansprüche, wobei die Anzeigeanordnung unter reflektierenden Anzeigeanordnungen und Anzeigeanordnungen gewählt worden ist, die teilweise reflektierend und teilweise durchlässig sind.

8. Einrichtung nach einem der vorstehenden Ansprüche, wobei die Anzeigeanordnung eine elektrophoretische Anzeigeanordnung (12; 112) ist.

9. Einrichtung nach einem der Ansprüche 1 bis 7, wobei die Anzeigeanordnung eine cholesterische LCD Anzeigeanordnung ist, wobei der Licht reflektierende Teil die Flüssigkristallschicht der LCD Anzeigeanordnung aufweist, wobei die Farbe der betreffenden Schicht zum Schaffen des gewünschten optischen Aussehens der Anzeigefläche vorgesehen ist.

10. Einrichtung nach einem der Ansprüche 1 bis 7, wobei die Anzeigeanordnung eine LCD Anzeigeanordnung ist.

11. Einrichtung nach Anspruch 10, wobei die Anzeigeanordnung eine normalerweise weiße LCD Anzeigeanordnung (312) mit einem Reflektor (325) ist, der mit einer den genannten Licht reflektierenden Teil bildenden Metalleffektlackschicht versehen ist.

12. Einrichtung nach Anspruch 1, wobei die Anzeigeanordnung aus elektrophoretischen Anzeigeanordnungen, bistabilen cholesterischen Anzeigeanordnungen und bistabilen LCD Anzeigeanordnungen gewählt worden ist, wodurch sie folglich imstande ist, dunkle und helle Teile an der Anzeigefläche (503) zu präsentieren, und zwar auch in dem inaktivierten Zustand der Anzeigeanordnung, wobei die Anzeigeanordnung in dem inaktivierten Zustand ein graphisches Muster schafft, das mit einem graphischen Muster auf der die Anzeigefläche (503) wenigstens teilweise umgebenden Vorderfläche übereinstimmt.

## Revendications

1. Dispositif de carte à mémoire (1) ayant une surface avant (2) et un affichage (11) qui présente un état activé et un état inactivé et qui est incorporé dans le dispositif (1) et qui présente une surface d'affichage (3) qui est au moins partiellement entourée de ladite surface avant (2), l'affichage (11) ayant une partie réfléchissant la lumière (23 ; 123 ; 225 ; 325 ; 426) qui réfléchit, dans l'état inactivé de l'affichage (11), la lumière entrante,
dans lequel, dans l'état inactivé, la partie réfléchissant la lumière est adaptée de manière à fournir à la surface d'affichage sensiblement le même aspect visuel que l'aspect visuel de la surface avant (2) qui entoure au moins partiellement la surface d'affichage (3) de telle façon que la surface d'affichage (3) ne puisse pas être distinguée de la surface avant environnante (2).

2. Dispositif selon la revendication 1, dans lequel l'affichage (11) lui-même est adapté de manière à réfléchir la lumière d'une certaine couleur dans l'état inactivé de l'affichage (11).

3. Dispositif selon la revendication 2, dans lequel l'affichage est pourvu d'un réflecteur (325) qui se situe derrière une couche commutable optique (323) de l'affichage et qui réfléchit la lumière d'une certaine couleur dans l'état inactivé de l'affichage.

4. Dispositif selon la revendication 1, dans lequel un couvercle transparent (120) est appliqué en haut de l'affichage (11), le couvercle transparent (120) étant pourvu d'une teinture afin de fournir, lorsqu'elle est combinée avec la lumière qui est réfléchie à partir de la partie réfléchissant la lumière (123 ; 225), à la surface d'affichage (103) l'aspect visuel souhaité.

5. Dispositif selon la revendication 4, dans lequel le couvercle transparent (120) est pourvu d'un colorant pour fournir l'aspect visuel souhaité dans l'état inactivé de l'affichage lorsqu'il est combiné avec la lumière qui est réfléchie à partir de la partie réfléchissant la lumière (123 ; 225).

6. Dispositif selon l'une quelconque des revendications précédentes 1 à 5, dans lequel une zone de transition (21 ; 121) qui se situe à l'endroit de la transition entre la surface avant (2 ; 102) et la surface d'affichage (3 ; 103) est rendue floue pour fournir une transition visuelle lisse entre la surface d'affichage (3 ; 103) et la surface avant (2 ; 102).

7. Dispositif selon l'une quelconque des revendications précédentes 1 à 6, dans lequel l'affichage est choisi parmi des affichages réfléchissants et des affichages qui sont partiellement réfléchissants et partiellement transmissibles.

8. Dispositif selon l'une quelconque des revendications précédentes 1 à 7, dans lequel l'affichage est un affichage électrophorétique (12 ; 112).

9. Dispositif selon l'une quelconque des revendications précédentes 1 à 7, dans lequel l'affichage est un affichage à cristaux liquides (LCD) cholestérique, la partie réfléchissant la lumière comprenant la couche à cristaux liquides de l'affichage à cristaux liquides dont la couleur est adaptée de manière à fournir l'aspect visuel souhaité de la surface d'affichage.

10. Dispositif selon l'une quelconque des revendications précédentes 1 à 7, dans lequel l'affichage est un affichage à cristaux liquides.

11. Dispositif selon la revendication 10, dans lequel l'affichage est un affichage à cristaux liquides normalement blanc (312) ayant un réflecteur (325) qui est pourvu d'une laque métallique et qui constitue ladite partie réfléchissant la lumière.

12. Dispositif selon la revendication 1, l'affichage étant choisi parmi des affichages électrophorétiques, des affichages cholestériques bistables et des affichages à cristaux liquides bistables, étant ainsi en mesure de présenter des parties sombres ainsi que claires sur la surface d'affichage (503) également dans l'état inactivé de l'affichage, l'affichage fournissant, dans son état inactivé, une configuration graphique qui correspond à une configuration graphique (506) sur la surface avant (502) entourant au moins partiellement la surface d'affichage (503).
